# EUROPEAN PATENT SPECIFICATION

(11) **EP 2 793 011 B1**
(45) Date of publication and mention of the grant of the patent: **11.10.2017**
(21) Application number: 14163275.2
(22) Date of filing: 02.04.2014
(51) Int. Cl.: G01M 3/02, B29C 65/82, G01M 3/28, F16L 55/11, B29C 57/02, B29C 57/04

(54) **Testing system for the operation of the tightness seal and bell of a pvc-type plastic material pipe, obtained by a forming process with integrated seal**
Testsystem zum Betrieb der Dichtigkeitsabdichtung und Glocke eines PVC-Kunststoffrohrs, das durch ein Verfahren mit integrierter Dichtung erhalten wird
Système d'essai pour le fonctionnement de l'étanchéité d'un joint d'étanchéité et d'une cloche de tuyau en matière plastique de type pvc, obtenu par un processus de formage avec joint intégré

(30) Priority: 05.04.2013 IT RA20130010
(43) Date of publication of application: 22.10.2014
(73) Proprietor: IPM S.R.L., 48022 Lugo (Ravenna) (IT)
(72) Inventor: Argnani, Claudio, 48022 Lugo (Ravenna) (IT)
(74) Representative: Petruzziello, Aldo

(56) References cited:
- CA-A1- 2 810 600
- GB-A- 233 275
- GB-A- 1 431 714
- US-A- 4 574 618
- US-A- 6 131 441

## Description

In the present state of the art of forming outside sleeves for bell joints for PVC-type plastic material pipes, the system known as "Rieber" or integrated seal forming process has become widely used.

This system consists in the structural use of the same seal for forming its ring seat to be created in the "bell", a term used in the industry and in industry-related standards to refer to the end of a pipe shaped as an outside sleeve, and engaging with the smooth and usually chamfered end of the next pipe, forming a joint named after it "bell joint".

The above-mentioned "Rieber" system or integrated seal forming process is organised in a number of successive operations, including first of all the accurate positioning of the tightness and forming seal on a special mandrel before belling, and/or the simultaneous heating to a plastic state of the relative axial end of the PVC pipe, and then, the introduction with an axial movement of that pipe end over the mandrel and the seal positioned thereon to reach the point corresponding to the bell edge. Then the adhesion to the mandrel and to the seal of the deformed pipe end is perfected point by point either through a special vacuum system between the two respective walls, or through an external pressure system implemented with special equipment; this is followed by the phases of shaped bell cooling and mandrel removal with a movement coaxial with the bell, leaving the seal inside its functional seat.

The main integrated seals available commercially to date are constituted by either a body entirely made of rubber, with a reinforcement metal ring on their inside, or an external stiffener in shaped polypropylene, which also acts as a sliding surface for the hot pipe during forming, with rubber only remaining in the sealing part; the latter type of seal ensures a higher rigidity and non-deformability, greater hygiene due to the absence of a metal part in drinking water distribution systems, and easier bell forming since the hot plastic material slides better on the smoother surface of the polypropylene stiffener.

Despite the mentioned advantages, which have helped the widespread use of the "Rieber" system or forming process with an integrated seal, to which other advantages must be added linked with the presence of a seal in the bell seat right from the forming phase, compared to a situation in which a ring is introduced at a later stage (such advantages being better guarantees of correct positioning, the impossibility of failure to introduce the seal itself or of accidental introduction of damaging foreign matters such as earth and dust), the above-mentioned system nonetheless presents a number of dangers that might alter its operation and are listed here below: first of all, the tightness-forming ring can be mistakenly positioned on the mandrel turned upside down (i.e. rotated by 180°); in this way, the subsequent joint tightness function is not correctly performed and a very hot pipe will probably be unable to climb onto the ring itself or climb onto it correctly, creating a number or folds and other shape irregularities; moreover, the same ring can be positioned on the mandrel at a wrong location, and consequently, the resulting bell is misshapen and joint tightness is not guaranteed; the same ring can be missing or be wrongly positioned at an angle with respect to the pipe section, due to a fault of the placement mechanism; in this case, too the shape of the bell and joint tightness are not as required and not guaranteed; also, the seal ring might break or crack in one or more transversal sections, particularly during the introduction on the forming mandrel, due to an incorrect operation or an inherent defect; in this case, too, joint tightness will not be ensured.

US 6,131,441 discloses an apparatus and method for testing the integrity of a pipe section, particularly the integrity of the welding of an end flange of a metal pipe for conveying petrochemicals or gases. For the test a hollow cylinder is used, on which two elastomeric annular rings are arranged, said rings being compressed against the inner wall of the pipe to be tested by screwing a shaft inside the cylinder and admitting a liquid in a chamber formed between the outer wall of the cylinder and the inner wall of the pipe.

US 4,574,618 discloses a method and an apparatus for detecting possible leaks in the tubes of a steam generator, and particularly to ascertaining whether previously found leaks in such tubes have been properly repaired.

GB233275 discloses an apparatus for testing joint structures on a pipe line and comprising an expandable casing which comprises a number of solid orchambered segments defining a broken circle and carrying a pair of obturating rings or bands made of rubber and suitable for coming in contact with the inner faces of the two joined pipes; more in particular said obturating rings or bands, together with the inner faces of the pipes, define an annular space or chamber into which will be forced fluid or air in order to test the presence of possible leaks.

Another document, GB1431714, discloses a mandrel for forming an enlargement in a pipe socket which comprises coaxial annular bodies provided with radially expandable/collapsible segments urging against the inner surface of a pipe so that it is shaped according to a mould part arranged coaxially an outside said pipe.

All the above documents require specially designed appliances for testing or forming pipes.

CA2810600 A1 relates to a device for shaping of the mouth of a biaxially oriented tube with an integrated gasket comprising a first sector designed to receive the end profile of said tube and with an external diameter suitable for introducing the gasket, a second cylindrical sector of diameter greater than that of the first sector and which is constituted as stop of the gasket, and a third sector concentric with the second sector, and a chamber open with the second sector at one of its ends is defined between the second sector and the third sector.

The purpose of the present invention is to remedy the above-mentioned potential defects of the belling system with integrated seal, as well as others linked with the tightness and positioning of the seal in the bell joint and with its shape.

This aim has been reached, according to the invention, by means of a system and a method to test the correct operation of the tightness seal and bell of a PVC-type plastic material pipe, having the features of the independent claim 1 and 6, respectively. Advantageous embodiments of the invention are disclosed in the dependent claims. Essentially, according to the invention, right after bell forming, as soon as the bell has sufficiently cooled down, and before the forming mandrel removal, a potentially closed chamber is created, if the seal is correctly operating and the bell is well formed, in which a pre-determined air pressure is achieved and measured.

The above-mentioned measuring chamber has roughly the shape of a hollow cylinder, in which the two side surfaces are constituted by the tightness and forming seal, specially positioned in the forming mandrel, with its sliding side for the moving hot pipe, and by a second seal between the pipe and mandrel, respectively, specially positioned in the front part of the same forming mandrel and whose active tightness surface corresponds, when the pipe is positioned on the mandrel, to the inside surface of a section of the same pipe, located downstream from the bell; in the same chamber, the outside wall is constituted by the inside surface of a section of pipe and the relevant bell, included between the two above-mentioned normal sections corresponding to the two seals, and the inside wall is constituted by the mandrel surface between the same two sections.

This chamber therefore consists of two fixed elements, corresponding to the forming mandrel and the front seal on it, respectively, and of two variable elements for each formed and tested bell, constituted by the tightness and forming seal and by the corresponding portion of pipe and bell just formed and cooled: the chamber closure is carried out correctly at each bell forming cycle, if the seal is present, intact and well positioned and if the bell has the required shape and dimensions.

The test at issue is carried out when the bell has sufficiently cooled down and before removing the forming mandrel with an axial movement, by letting in pressured air according to a pre-determined flow rate through a special hole in the mandrel itself, comprised between two seals on the same mandrel; this hole is preferably located close to the forming seal, for better guarantees of smooth operation and to obtain a more effective and more evenly distributed pressurised air flow.

If, after a certain time, the pre-determined pressure is reached, the chamber has been demonstrated to be tight and both the seal and the bell can be considered free from the inspected defects.

These and other characteristics and advantages of this invention will be specified in greater detail in the following description of an embodiment - illustrated by way of example only and by no way of limitation, with reference to the annexed drawings, wherein:
- Fig. 1 is a schematic view with a partial cross-section of the significant elements of the present invention;
- Figs. 2 and 3 are enlarged views of the encircled particulars indicated with the letters A and B in Fig. 1.

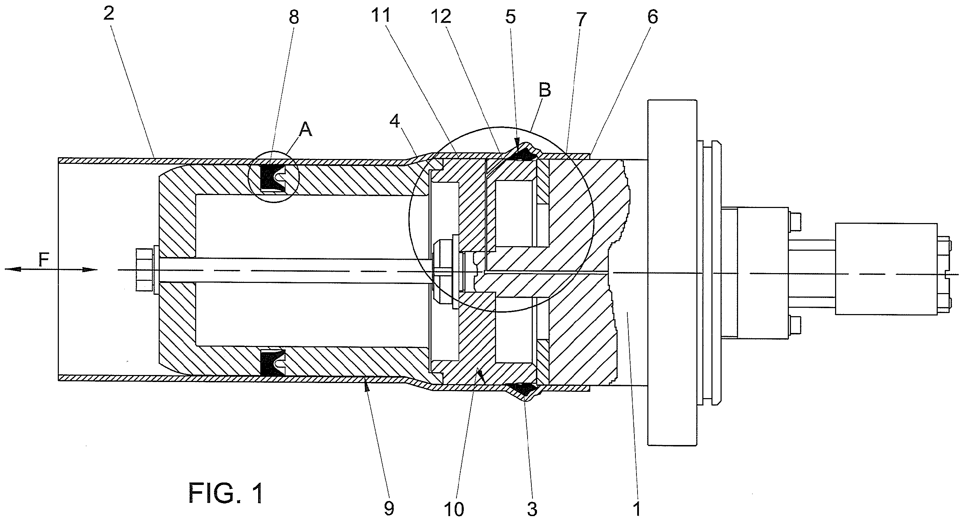

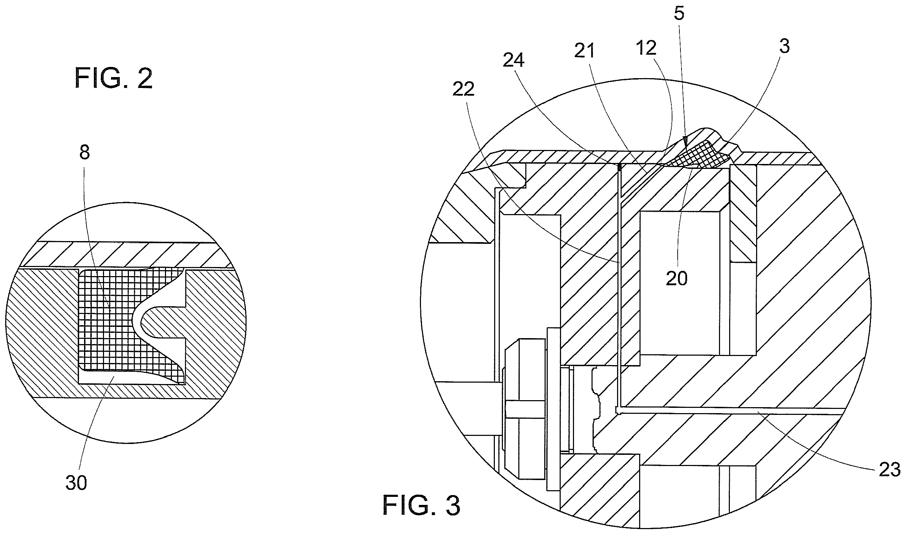

In Fig. 1, the forming mandrel (1) is represented in the final belling position with respect to the end of the pipe (2), in PVC-type plastic material; this positioning is achieved after having installed on a suitable annular seat 20 (Fig. 3) on the mandrel (1) the tightness/forming seal (3) and after having performed a relative coaxial movement in the direction of the double arrow F between the mandrel (1) and the pipe (2); in this movement, the pipe end, preliminarily heated to reach its softening/plasticization temperature, slides on the mandrel (1), slides and climbs on to the slanted part (5) of the seal (3), until it reaches the position shown in Fig, 1 corresponding to the limit edge (6) of the newly formed bell (7).

Not shown in the figure, as not part of the present invention, is the remaining bell forming mechanism, alternatively constituted either by a device to create vacuum on the inside of the bell itself or by an additional device to create external pressure as required, acting against its outside wall.

In the front part of the mandrel (1), in a suitable annular seat 30, better shown in the enlargement of Fig. 2, a further ring seal (8) is positioned, suitable for ensuring tightness between the wall (9) of the mandrel (1) and the inside surface (10) of the pipe (2) and the bell (7), this seal (8) being located preferably immediately downstream from the bell (7) and the two surfaces on the outside (9) of the mandrel and inside (10) of the pipe being axially comprised between the two seals (3) and (8). The above mentioned devices define a testing chamber (11) constituted by the two seals (3) and (8) and by the surfaces (9) and (10); by sending pressurised air to the inside of that chamber through a hole (12), located on the surface (9) of the mandrel (1), preferably in close proximity to the wall (5) of the seal (3), according to a pre-determined flow rate, the same chamber reaches a given measurable pressure by a given time, if the chamber is closed, and in particular, if the seal (3) is functional (in terms of both intrinsic intactness and positioning of the bell) and if the inside surface (10) of the bell (7) is well formed.

The seal (8) indicated in the drawing is a lip type seal: the inventive nature of the testing device, however, is not affected if the seal is of a different type, as long as its full functionality is preserved.

The tightness chamber (11) can extend from the seal (3) for even just a section of the cylindrical surface of the bell (7), excluding the conical surface 4 of the pipe and adjacent pipe section not moulded in a bell, in which case the seal (8) would be provided at said section of the cylindrical surface of the bell.

The introduction of pressurised air into the chamber (11) may occur, in addition to through a single hole (12), also through two or more holes, specially arranged on the surface (9) of the mandrel (1), comprised between the two seals (3) and (8).

In the embodiment shown, the hole 12 is provided at the end of an inclined section 21 of a radial channel 22 joined to an axial channel 23. The radial channel 22 is closed with a plug 24 so that the air is directed towards the tightness seal 3.
Of course the hole 12 could be provided directly at the end of the radial channel 22, if this channel is provided in the mandrel body so as to end closer to the seal 3.

The chamber (11) pressure tightness test can be carried out after the end of the forming cycle, and after having removed the mandrel (1), inserting into the bell (7) a suitable means with a respective tightness seal (8), suitable for performing the closing function of the chamber (11).

## Claims

1. A testing system to test the correct operation of the tightness seal (3) and bell (7) of a PVC-type plastic material pipe (2), comprising
a forming mandrel (1) with integrated seal (3) for forming said bell (7), said mandrel (1) having a seat (20) housing said seal (3) and being axially inserted in the pipe (2) previously heated at its softening/plasticization temperature for forming the bell,
**characterised in that** said seal (3) has a slanted part (5) onto which the pipe slides and climbs when sliding with respect to the mandrel (1) and
said mandrel (1) has a second seat (30) housing a further seal (8), such that between said seals (3) and (8), the outside surface (9) of the same mandrel (1) and the inside surface (10) of the bell (7) a chamber (11) is formed **and defined right after bell forming as soon as the bell has cooled down,**
at least one hole (12) being provided on the surface (9) of the mandrel in close proximity to the slanted part (5) of the seal (3) for air pressure admission in said chamber (11) so as to test the tightness of the same chamber and then of the seal (3),
**said further seal (8) being a fixed element.**

2. Testing system according to claim 1, **characterised in that** said at least one hole (12) is provided at the end of a channel (21, 22, 23) made in said mandrel (1).

3. Testing system according to anyone of the preceding claims, **characterised in that** said second seat (30) for the further seal (8) on the mandrel (1) is located at a distance from the seat (20) of the seal (3) such that the chamber (11) extends only for a section of the bell (7), without interesting the pipe (2) not moulded into a bell.

4. Testing system according to anyone of claims 1 to 2, **characterised in that** said second seat (30) for the further seal (8) on the mandrel (1) is located at a distance from the seat (20) of the seal (3) such that the chamber (11) extends also for a section of the pipe (2) not moulded into a bell.

5. Testing system according to anyone of the previous claims, **characterised in that** said further seal (8) positioned on the mandrel (1) which creates tightness between the same mandrel (1) and the pipe inside surface (2) is a lip type seal.

6. A method for testing the correct operation of the tightness seal (3) and bell (7) of a PVC-type plastic material pipe (2), wherein:
said bell is obtained by axially inserting a forming mandrel (1) bearing said tightness seal (3) in the pipe (2) by means of a relative axial movement between the mandrel and the pipe previously heated at the softening/plasticization temperature and with a pipe end sliding and climbing on a slanted part (5) of the seal (3); and
admission of air is provided in a chamber (11) delimited by said tightness seals (3), wherein said chamber is formed and defined right after bell forming as soon as the bell has cooled down, a further seal (8) is positioned on the mandrel (1), the outside surface (9) of the same mandrel and the inside surface (10) of the bell (7) so as to test the pressure tightness of said chamber (11) and then of the seal (3), said further seal (8) being a fixed element.

7. A method according to claim 1, **characterised in that** the above-mentioned pressure tightness of chamber (11) is ensured by its inside reaching a pre-determined pressure, this pressure being obtained by supplying a flow of air according to a pre-determined flow rate for a given period of time.

8. A method according to claim 6 or 7, **characterised in that** said admission of air in the chamber (11) takes place through at least one hole (12) provided on the surface (9) of the mandrel between the seals (3) and (8).

9. A method according to anyone of claims 6 to 8, **characterised in that** said admission of air in the chamber (11) takes place close to said tightness seal (3).

10. A method according to anyone of claims 6 to 8, **characterised in that** said admission of air in the chamber (11) through said at least one hole (12) takes place through a channel (21, 22, 23) made in said mandrel (1).

11. A method according to anyone of claims 6 to 10, **characterised in that** said pressure chamber (11) extends from the tightness position of the seal (3) only for a section of the bell (7) cylindrical surface, without interesting the pipe (2) not moulded into a bell.

12. A method according to anyone of claims 6 to 10, **characterised in that** said pressure chamber (11) extends from the tightness position of the seal (3) also for a section of the pipe (2) not moulded into a bell.

13. A method according to anyone of claims 6 to 12, **characterised in that** the pressure tightness test on the chamber (11) is performed within the forming cycle, after cooling of the bell (7) already formed and before removal of the mandrel (1) from the same bell with an axial movement.

14. A method according to anyone of claims 6 to 12, **characterised in that** the pressure tightness test on the chamber (11) is performed after the axial removing of the forming mandrel (1) from the pipe (4) by inserting into the bell (7) a suitable means with a respective tightness seal (8), suitable for performing the closing function of the chamber (11).

## Patentansprüche

1. Prüfsystem zum Prüfen der Funktionstüchtigkeit der Dichtigkeitsdichtung (3) und Glocke (7) eines PVC-Kunststoffrohrs (2), das Folgende aufweist:
einen Formungsdorn (1) mit integrierten Dichtung (3) zum Ausformen einer Glocke (7), wobei der Formungsdorn (1) eine Aufnahme (20) aufweist, die die Dichtung (3) aufnimmt, und axial in das Rohr (2), das zuvor auf seine Erweichungs-/Plastifizierungstemperatur erwärmt wurde, um die Glocke auszubilden, eingeführt wird, **dadurch gekennzeichnet, dass** die Dichtung (3) einen abgeschrägten Abschnitt (5) aufweist, auf den das Rohr gleitet und sich hinaufschiebt, wenn es bezügliche des Formungsdorns (1) gleitet, und
der Formungsdorn (1) eine zweite Aufnahme (30) aufweist, die eine weitere Dichtung (8) aufnimmt, so dass zwischen den Dichtungen (3) und (8), der Außenfläche (9) des Formungsdorns (1) und der Innenfläche (10) der Glocke (7) eine Kammer (11) sofort nach dem Ausbilden und Abkühlen der Glocke ausgebildet und definiert wird,
mindestens ein Loch (12), das auf der Oberfläche (9) des Formungsdorns nahe dem abgeschrägten Abschnitt (5) der Dichtung (3) zum Einlassen von Luftdruck in die Kammer (11) bereitgestellt ist, derart dass die Dichtigkeit der Kammer und danach der Dichtung (3) geprüft wird,
wobei die weitere Dichtung (8) ein fixiertes Element ist.

2. Prüfsystem nach Anspruch 1, **dadurch gekennzeichnet, dass** das mindestens eine Loch (12) am Ende eines Kanals (21, 22, 23), der in dem Formungsdorn (1) ausgebildet ist, bereitgestellt ist.

3. Prüfsystem nach einem der vorhergehenden Ansprüche, **dadurch gekennzeichnet, dass** die zweite Aufnahme (30) für die weitere Dichtung (8) an dem Formungsdorn (1) in einem Abstand von der Aufnahme (20) der Dichtung (3) vorliegt, derart dass sich die Kammer (11) nur über einen Teil der Glocke (7) erstreckt ohne das Rohr (2), das nicht zu einer Glocke geformt ist, zu interessieren.

4. Prüfsystem nach einem der Ansprüche 1 bis 2, **dadurch gekennzeichnet, dass** die zweite Aufnahme (30) für die weitere Dichtung (8) an dem Formungsdorn (1) in einem Abstand von der Aufnahme (20) der Dichtung (3) vorliegt, derart dass sich die Kammer (11) auch über einen Teil des Rohrs (2), der nicht zu einer Glocke geformt ist, erstreckt.

5. Prüfsystem nach einem der vorhergehenden Ansprüche, **dadurch gekennzeichnet, dass** die weitere Dichtung (8), die sich an dem Formungsdorn (1) befindet und Dichtigkeit zwischen dem Formungsdorn (1) und der Innenfläche des Rohrs (2) erzeugt, ein Lippenring ist.

6. Verfahren zum Prüfen der Funktionstüchtigkeit der Dichtigkeitsdichtung (3) und Glocke (7) eines PVC-Kunststoffrohrs (2), wobei:
die Glocke durch axiales Einführen eines Formungsdorns (1), der die Dichtigkeitsdichtung (3) in dem Rohr (2) aufweist, durch eine relative axiale Bewegung zwischen dem Formungsdorn und dem Rohr, das zuvor auf Erweichungs-/Plastifizierungstemperatur erwärmt wurde, und dadurch, dass ein Rohrende auf einen abgeschrägten Abschnitt (5) der Dichtung (3) gleitet und sich darauf hinaufschiebt, erhalten wird; und
das Einlassen von Luft in eine Kammer (11), die durch die Dichtigkeitsdichtung (3) abgegrenzt ist, bereitgestellt ist, wobei die Kammer sofort nach dem Ausformen und Abkühlen der Glocke ausgeformt und definiert wird, eine weitere Dichtung (8) an dem Formungsdorn (1), der Außenfläche (9) des Formungsdorns und der Innenfläche (10) der Glocke (7) vorliegt, derart dass die Druckdichtigkeit der Kammer (11) und der Dichtung (3) geprüft wird, wobei die weitere Dichtung (8) ein fixiertes Element ist.

7. Verfahren nach Anspruch 1, **dadurch gekennzeichnet, dass** die oben genannte Druckdichtigkeit der Kammer (11) dadurch sichergestellt ist, dass im Inneren ein vorbestimmter Druck erreicht ist, wobei dieser Druck durch Bereitstellen eines Luftstroms gemäß einer vorbestimmten Fließgeschwindigkeit über eine bestimmte Zeitperiode erhalten wird.

8. Verfahren nach einem der Ansprüche 6 oder 7, **dadurch gekennzeichnet, dass** das Einlassen von Luft in die Kammer (11) durch mindestens ein Loch (12), das an der Oberfläche (9) des Dorns zwischen den Dichtungen (3) und (8) bereitgestellt ist, stattfindet.

9. Verfahren nach einem der Ansprüche 6 bis 8, **dadurch gekennzeichnet, dass** das Einlassen von Luft in die Kammer (11) nahe der Dichtigkeitsdichtung (3) stattfindet.

10. Verfahren nach einem der Ansprüche 6 bis 8, **dadurch gekennzeichnet, dass** das Einlassen von Luft in die Kammer (11) durch das mindestens eine Loch (12) durch einen Kanal (21, 22, 23), der in dem Formungsdorn (1) geformt ist, stattfindet.

11. Verfahren nach einem der Ansprüche 6 bis 10, **dadurch gekennzeichnet, dass** sich die Druckkammer (11) von der Dichtigkeitsposition der Dichtung (3) nur über einen Teil der zylinderförmigen Oberfläche der Glocke (7) erstreckt, ohne das Rohr (2), das nicht zu einer Glocke geformt ist, zu interessieren.

12. Verfahren nach einem der Ansprüche 6 bis 10, **dadurch gekennzeichnet, dass** sich die Druckkammer (11) von der Dichtigkeitsposition der Dichtung (3) auch über einen Teil des Rohrs (2), das nicht zu einer Glocke geformt ist, erstreckt.

13. Verfahren nach einem der Ansprüche 6 bis 12, **dadurch gekennzeichnet, dass** die Druckdichtigkeitsprüfung der Kammer (11) innerhalb eines Formungszyklus nach dem Abkühlen der Glocke (7), die bereits ausgeformt ist, und vor dem Entfernen des Formungsdorns (1) aus der Glocke mit einer axialen Bewegung, durchgeführt wird.

14. Verfahren nach einem der Ansprüche 6 bis 12, **dadurch gekennzeichnet, dass** die Druckdichtigkeitsprüfung der Kammer (11) nach dem axialen Entfernen des Formungsdorns (1) aus dem Rohr (4) durch Einführen eines geeigneten Werkzeugs mit einer entsprechenden Dichtigkeitsdichtung (8), das zum Durchführen der Schließfunktion der Kammer (11) geeignet ist, in die Glocke (7) durchgeführt wird.

## Revendications

1. Système de test pour tester le fonctionnement correct du joint d'étanchéité (3) et de l'emboîtement (7) d'un tuyau en matière plastique de type PVC (2), comprenant :
un mandrin de formage (1) avec un joint intégré(3) pour former ledit emboîtement (7), ledit mandrin (1) ayant un logement (20) hébergeant ledit joint (3) et étant inséré axialement dans le tuyau (2) préalablement chauffé à sa température de ramollissement/plastification pour former l'emboîtement,
**caractérisé en ce que** ledit joint (3) a une partie inclinée (5) sur laquelle le tuyau coulisse et grimpe en coulissant par rapport au mandrin (1) et
ledit mandrin (1) a un deuxième logement (30) hébergeant un autre joint (8) de sorte qu'entre lesdits joints (3) et (8), la surface extérieure (9) du même mandrin (1) et la surface intérieure (10) de l'emboîtement (7), une chambre (11) est formée et définie juste après la formation de l'emboîtement dès que l'emboîtement a refroidi,
au moins un trou (12) étant fourni à la surface (9) du mandrin à proximité immédiate de la partie inclinée (5) du joint (3) pour l'admission de pression d'air dans ladite chambre (11) de manière à tester l'étanchéité de cette même chambre et ensuite du joint (3),
ledit autre joint (8) étant un élément fixe.

2. Système de test selon la revendication 1, **caractérisé en ce que** ledit au moins un trou (12) est fourni à l'extrémité d'un canal (21, 22, 23) formé dans ledit mandrin (1).

3. Système de test selon l'une quelconque des revendications précédentes, **caractérisé en ce que** ledit deuxième logement (30) pour l'autre joint (8) sur le mandrin (1) est situé à une distance du logement (20) du joint (3) de manière à ce que la chambre (11) s'étende seulement pour une section de l'emboîtement (7) sans concerner le tuyau (2) non moulé en un emboîtement.

4. Système de test selon l'une quelconque des revendications 1 à 2, **caractérisé en ce que** ledit deuxième logement (30) pour l'autre joint (8) sur le mandrin (1) est situé à une distance du logement (20) du joint (3) de sorte que la chambre (11) s'étend également pour une section du tuyau (2) non moulée en un emboîtement.

5. Système de test selon l'une quelconque des revendications précédentes, **caractérisé en ce que** ledit autre joint (8) positionné sur le mandrin (1) qui créé l'étanchéité entre ce même mandrin (1) et la surface intérieure de tuyau (2) est un joint de type à lèvres.

6. Procédé pour tester le fonctionnement correct du joint d'étanchéité (3) et de l'emboîtement (7) d'un tuyau en matière plastique de type PVC (2), dans lequel :
ledit emboîtement est obtenu en insérant axialement un mandrin de formage (1) portant ledit joint d'étanchéité (3) dans le tuyau (2) au moyen d'un mouvement axial relatif entre le mandrin et le tuyau préalablement chauffé à la température de ramollissement/plastification et avec une extrémité de tuyau coulissant et grimpant sur une partie inclinée (5) du joint (3) ; et
l'admission d'air est fournie dans une chambre (11) délimitée par lesdits joints d'étanchéité (3), dans lequel ladite chambre est formée et définie juste après la formation de l'emboîtement dès que l'emboîtement a refroidi, un autre joint (8) est positionné sur le mandrin (1), la surface extérieure (9) du même mandrin et la surface intérieure (10) de l'emboîtement (7) de manière à tester l'étanchéité à la pression de ladite chambre (11) et ensuite du joint (3), ledit autre joint (8) étant un élément fixe.

7. Procédé selon la revendication 1, **caractérisé en ce que** l'étanchéité à la pression mentionnée ci-dessus de la chambre (11) est garantie par le fait que son intérieur atteint une pression prédéterminée, cette pression étant obtenue en fournissant un flux d'air selon un débit prédéterminé pour une période de temps donnée.

8. Procédé selon la revendication 6 ou 7, **caractérisé en ce que** ladite admission d'air dans la chambre (11) s'effectue à travers au moins un trou (12) fourni à la surface (9) du mandrin entre les joints (3) et (8).

9. Procédé selon l'une quelconque des revendications 6 à 8, **caractérisé en ce que** ladite admission d'air dans la chambre (11) s'effectue à proximité dudit joint d'étanchéité (3).

10. Procédé selon l'une quelconque des revendications 6 à 8, **caractérisé en ce que** ladite admission d'air dans la chambre (11) à travers ledit au moins un trou (12) s'effectue à travers un canal (21, 22, 23) formé dans ledit mandrin (1).

11. Procédé selon l'une quelconque des revendications 6 à 10, **caractérisé en ce que** ladite chambre de pression (11) s'étend à partir de la position d'étanchéité du joint (3) seulement pour une section de la surface cylindrique de l'emboîtement (7) sans concerner le tuyau (2) non moulé en un emboîtement.

12. Procédé selon l'une quelconque des revendications 6 à 10, **caractérisé en ce que** ladite chambre de pression (11) s'étend à partir de la position d'étanchéité du joint (3) également pour une section du tuyau (2) non moulée en un emboîtement.

13. Procédé selon l'une quelconque des revendications 6 à 12, **caractérisé en ce que** le test d'étanchéité à la pression de la chambre (11) est effectué au sein du cycle de formage, après le refroidissement de l'emboîtement (7) déjà formé et avant le retrait du mandrin (1) de ce même emboîtement avec un mouvement axial.

14. Procédé selon l'une quelconque des revendications 6 à 12, **caractérisé en ce que** le test d'étanchéité à la pression de la chambre (11) est effectué après le retrait axial du mandrin de formage (1) du tuyau (4) en insérant dans l'emboîtement (7) un moyen adapté avec un joint d'étanchéité (8) respectif adapté pour réaliser la fonction de fermeture de la chambre (11).
